(19) Europäisches Patentamt
European Patent Office
Office européen des brevets

(11) **EP 3 053 455 B1**

(12) **EUROPEAN PATENT SPECIFICATION**

(45) Date of publication and mention
of the grant of the patent:
**21.02.2018   Bulletin 2018/08**

(21) Application number: **14851382.3**

(22) Date of filing: **30.09.2014**

(51) Int Cl.:
**A23L 7/113** *(2016.01)*         **A23L 7/109** *(2016.01)*

(86) International application number:
**PCT/JP2014/076075**

(87) International publication number:
**WO 2015/050121 (09.04.2015 Gazette 2015/14)**

(54) **METHOD FOR PRODUCING INSTANT NOODLES AND  INSTANT NOODLES**

VERFAHREN ZUR HERSTELLUNG VON INSTANTNUDELN UND INSTANTNUDELN

PROCÉDÉ DE FABRICATION DE NOUILLES INSTANTANÉES ET NOUILLES INSTANTANÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.10.2013   JP 2013206329**

(43) Date of publication of application:
**10.08.2016   Bulletin 2016/32**

(73) Proprietor: **Nissin Foods Holdings Co., Ltd.**
**Osaka-shi, Osaka 532-8524 (JP)**

(72) Inventors:
• **TANAKA, Mitsuru**
**Osaka-shi**
**Osaka 532-8524 (JP)**
• **YOSHINUMA, Toshio**
**Osaka-shi**
**Osaka 532-8524 (JP)**
• **ISHIKAWA, Hiroumi**
**Osaka-shi**
**Osaka 532-8524 (JP)**

(74) Representative: **Addiss, John William et al**
**Mewburn Ellis LLP**
**City Tower**
**40 Basinghall Street**
**London EC2V 5DE (GB)**

(56) References cited:
WO-A1-2006/049267    WO-A1-2010/101268
WO-A1-2011/013185    WO-A1-2011/077600
WO-A1-2011/114690    WO-A1-2012/029195
WO-A1-2012/127527    WO-A1-2013/008910
JP-A- 2007 222 139    JP-A- 2011 055 789
JP-A- 2012 050 413    JP-A- 2012 060 998
JP-A- 2012 065 594

**Description**

**Technical Field**

The present invention relates to a method for producing instant noodles using superheated steam, and instant noodles.

**Background Art**

Generally, instant noodles are produced by the following manner: a noodle dough is prepared using cereal flour, such as wheat flour or buckwheat flour, as a main raw material; the dough is rolled out and cut to produce raw noodle strings; the raw noodle strings are then subjected to a gelatinization process by steaming or boiling; the noodle strings are then cut into one meal amount; and the noodle strings are dried. Depending on the type of this drying step, the instant noodles can be broadly classified into fried noodles and non-fried noodles. The fried noodles are noodles produced by frying the gelatinized noodle strings in an oil of about 150°C to dry the noodles. In contrast, the non-fried noodles are noodles produced by drying the gelatinized noodle strings by a method, such as hot-air drying, high-temperature hot-air drying, microwave drying, freeze dry, or low-temperature air drying, other than the frying process. In addition, there are so-called fresh type instant noodles, which are obtained through pH adjustment, heat sterilization, and full sealing without the drying step.

The gelatinization process of the instant noodles is carried out by boiling in boiling water or carried out by introducing steam generated by a boiler to a steam chamber and steaming the noodle strings with this steam. Generally, the gelatinization process is carried out by steaming with saturated steam at a temperature close to the boiling point of water. It is also known that the gelatinization process of the raw noodle strings is carried out using superheated steam rather than the saturated steam (e.g., PTL 1 to PTL 4). The superheated steam refers to steam generated by further heating the saturated steam to increase its temperature to 100°C or higher under atmospheric pressure.

The technique of producing instant noodles using the superheated steam includes techniques described in, for example, PTL 1 to PTL 4.

PTL 1 states the followings: the raw noodle strings having a high moisture content are gelatinized and dried with the superheated steam while adjusting a moisture evaporation rate; and this operation yields dried noodles having a uniform and high degree of swelling without cracks or blisters.

PTL 2 states the followings: the raw noodle strings are gelatinized and swelled with the superheated steam, then cooled down, and dried with hot air; and this operation can shorten the drying time and yields dried noodles that have a good storage property and a good reconstitution property.

The inventions described in PTL 1 and PTL 2 employ the superheated steam as means of gelatinization, swelling, and drying and thus produce noodles having a high reconstitution property. Due to the high degree of swelling, however, the core becomes spongy texture, and supple texture is difficult to obtain.

The inventions described in PTL 3 and PTL 4 employ the superheated steam as means of gelatinization.

PTL 3 states the followings: the raw noodle strings are steamed with steam generated by the heating of the saturated steam in an atmosphere; and this operation can shorten the reconstitution time and yields instant noodles, such as fried noodles or hot-air dried noodles, which have smooth and elastic noodle quality and clear appearance without any surface roughness of the noodle strings, such as blisters or foaming, do not lose texture soon, and can maintain the noodle quality for a sufficient time after cooking.

PTL 4 states that instant noodles having fresh noodle-like texture and flavor and an excellent reconstitution property even if the instant noodles are thick with a large width are obtained by the step of steaming raw noodle strings by directly spraying superheated steam flow to the raw noodle strings, the step of supplying the noodle strings with moisture, and the step of subsequently steaming the noodle strings again with the superheated steam and/or non-superheated steam, followed by drying.

These methods, however, bring the surface smoothness or softness of noodle strings, but are unsuitable for obtaining supple texture because of the hard center portions of the noodle strings, which are preferred for obtaining fresh noodle-like texture.

Meanwhile, PTL 5 and PTL 6 describe techniques using a powder fat or oil or emulsifier for the instant noodles.

PTL 5 states the followings: a fat or oil or an emulsifier that is in a solid state at ordinary temperature is incorporated into the noodle strings; and this operation improves the reconstitution property of thick noodles, shortens the reconstitution time, and yields elastic and smooth noodles seasoned with soup.

PTL 6 states the followings: the noodle strings containing a powder fat or oil and/or emulsifier having a particle size of 0.15 mm or larger are steamed and dried with hot air of 110°C or higher; and this operation prevents cracks in the noodle strings, which are a problem of high-temperature hot-air drying, and yields noodles also having fresh noodle-like texture. PTL 7 discloses a method for preparing instant noodles where powdered fat or oils are dusted on the noodle surface. Superheated steam is mentioned between other methods for drying the noodles. The addition of the fat powder on the surface helps detangling the noodles.

These techniques, however, often fail to bring supple texture, though the techniques can improve the reconstitution property or produce elasticity or fresh noodle-like viscoelasticity.

**Citation List**

**Patent Literature**

> PTL 1: Japanese Examined Patent Application Publication No. S63-56787
> PTL 2: Japanese Examined Patent Application Publication No. S62-62138
> PTL 3: Japanese Laid-Open Patent Application Publication No. 2003-174853
> PTL 4: Japanese Patent No. 4438969
> PTL 5: Japanese Laid-Open Patent Application Publication No. S59-63152
> PTL 6: Japanese Laid-Open Patent Application Publication No. 2006-122020
> PTL 7: Japanase Patent Application Publication No. 2011-055789

**Summary of Invention**

**Technical Problem**

Instant noodles having fresh noodle-like texture with soft surface and a sticky and elastic core are currently being the mainstream of instant noodles provided in the market. Nonetheless, the core tends to remain hard, and their texture is still very different from the texture of fresh noodles.

For obtaining texture closer to the texture of fresh noodles, the instant noodles are desired to have supple texture as a whole by having a not too hard but moderately elastic core while maintaining surface softness.

However, in the case of using the conventional techniques for the instant noodles, which are cooked by the addition of boiling water or short-time boiling, such texture is difficult to obtain and, particularly, is very difficult to obtain for thick noodle strings.

An object of the present invention is to provide a method for producing instant noodles having supple texture as a whole by having soft surface and a moderately elastic core, and such instant noodles.

**Solution to Problem**

As a result of diligent studies, the present inventors have found that raw noodle strings containing a powder fat or oil and/or emulsifier are treated with superheated steam, whereby instant noodles having supple texture with soft surface and a moderately elastic core can be produced, regardless of the type of a subsequent drying method and regardless of the presence or absence of the drying step, and the present inventors consequently completed the present invention.

Specifically, the method for producing instant noodles according to the present invention comprises the step of treating raw noodle strings containing a fat or oil and/or an emulsifier in a solid state with superheated steam.

Preferably, the fat or oil and/or the emulsifier in a solid state is contained in an amount of 0.1 to 10% with respect to the weight of a main raw material powder.

Preferably, the temperature of the superheated steam to which the raw noodle strings are exposed is 120 to 200°C.

Preferably, the method for producing instant noodles further comprises a drying step of drying the noodle strings treated with the superheated steam.

Preferably, the drying step is the step of drying the noodle strings by a fry drying process, a hot-air drying process, a high-temperature hot-air drying process, a superheated steam drying process, a microwave drying process, or a freeze dry process, or a combination thereof.

The instant noodles according to the present invention are produced by the production method described above.

**Advantageous Effects of Invention**

The present invention can provide a method for producing instant noodles having supple texture as a whole with soft surface of the noodle strings and a moderately elastic core, and such instant noodles.

**Brief Description of Drawings**

Figure 1 shows an enlarged view of an image of the photographed cross section of noodle strings produced in Example 1-1'.
Figure 2 shows an enlarged view of an image of the photographed cross section of noodle strings produced in Comparative Example 1-1'.
Figure 3 shows an enlarged view of an image of the photographed cross section of noodle strings produced in Comparative Example 1-2'.
Figure 4 shows an enlarged view of an image of the photographed cross section of noodle strings produced in Comparative Example 1-3'.

**Description of Embodiments**

Hereinafter, the method for producing instant noodles according to the embodiment of the present invention will be specifically described in order of steps. However, the present invention is not intended to be limited by the embodiment below.

1. Raw material formulation, mixing, rolling out, and cutting

In the present embodiment, first, raw noodle strings are prepared by an ordinary method. Specifically, auxiliary materials, a powder fat or oil and/or emulsifier, and kneading water are added to a main raw material powder, such as wheat flour, and the mixture is kneaded, then combined, rolled out, and cut to prepare raw noodle strings. Instead of cutting to produce the noodle strings, the raw noodle strings may be produced by extruding the mixture using an extruder or the like.

The shape of the noodle strings may be any shape generally known as noodles as long as the shape is linear or corded as found in Chinese noodles, pastas, wheat noodles, buckwheat noodles, etc. Alternatively, the shape of the noodle strings may be any desired shape, such as a pasta shape, known to those skilled in the art.

Examples of the main raw material powder include: cereal flour such as wheat flour, durum wheat flour, buckwheat flour, barley flour, rice flour, and corn flour; starches such as potato starch, tapioca starch, waxy corn starch, corn starch, and wheat starch; and processed products of these starches.

Examples of the auxiliary materials include brine water, phosphate, salt, polysaccharide thickeners, eggs, gluten, and lecithin. Brine water, phosphate, salt, polysaccharide thickeners, lecithin, or the like may be dissolved in kneading water and added.

The powder fat or oil used in the present embodiment is a powder fat or oil that is in a solid powder form at ordinary temperature and is melted during the treatment with superheated steam. Specifically, a hydrogenated fat or oil of a plant-derived fat or oil such as palm oil or rapeseed oil is preferably used. The fat or oil that can be used preferably has an open tube melting point of about 45 to 75°C, particularly preferably about 55 to 65°C. The fat or oil needs to have a melting point such that the fat or oil is not melted by frictional heat during noodle making. As for particle size, the average particle size of the powder fat or oil is preferably about 100 to 500 $\mu$m. A powder fat or oil having too small a particle size is less effective. Too large a particle size presents problems associated with noodle making, such as breakage of noodle strings. The shape of the fat or oil is preferably spherical because such a spherical fat or oil can be uniformly dispersed. Any shape such as a rod-like or scalelike shape can also be used.

The amount of the powder fat or oil added is preferably 0.1 to 10 wt%, more preferably 0.5 to 6.0 wt%, further preferably 1.0 to 3.0 wt%, with respect to the total weight of the main raw material.

The powder emulsifier used in the present embodiment is a powder emulsifier that is in a solid powder form at ordinary temperature and is melted during the treatment with superheated steam. Specific examples thereof can include glycerin fatty acid ester, sucrose fatty acid ester, sorbitan fatty acid ester, and propylene glycol fatty acid ester. Glycerin fatty acid ester is preferred. The open tube melting point is preferably 45 to 75°C, and the average particle size is preferably 100 to 500 $\mu$m.

The method for adding the powder fat or oil and/or emulsifier may employ any known means. For example, the main raw material powder and the powder fat or oil and/or emulsifier are added to a mixer and then uniformly dispersed by well stirring, and then, kneading water is added and kneaded into the mixture to prepare a noodle dough.

The method for preparing raw noodle strings from the prepared noodle dough may employ any known means. For example, the prepared noodle dough can be rolled out to form a noodle belt, which is then combined, rolled out, and cut. Alternatively, three or more layers of noodle belts prepared by rolling out the noodle dough may be further rolled out to form a noodle belt having a multilayer structure, which is then rolled out and cut. Further alternatively, the noodle dough may be extruded using an extruder or the like to prepare noodle strings. In yet another alternative method that may be adopted, the noodle dough is extruded into a small mass using an extruder or the like, and this small mass is then rolled out into a noodle belt, which is then combined, rolled out, and cut.

2. Gelatinization process

Next, the noodle strings are subjected to a gelatinization process by treating the raw noodle strings prepared as described above with superheated steam.

In the present embodiment, examples of the method for treating the raw noodle strings with superheated steam include a method of bringing the superheated steam in contact with the raw noodle strings by direct spraying, a method of bringing the superheated steam in contact with the raw noodle strings under atmospheric conditions, and a method of bringing the superheated steam in indirect contact with the raw noodle strings.

The method of bringing the superheated steam in contact with the raw noodle strings by direct spraying means a method in which the flow of the superheated steam ejected from an ejection hole into the steam chamber does not contact the other solid substances before contacting the noodle strings, and in addition, in which the superheated steam directly contacts the surface of the raw noodle strings before the steam flow loses speed and completely spreads. The method for spraying the superheated steam flow in the steam chamber is not particularly limited, but it is preferred to dispose a plurality of ejection holes so as to uniformly spray the superheated steam on the entire noodle strings. In the case of a tunnel type steam chamber in which a net conveyor moves in a horizontal direction, the superheated steam flow is preferably sprayed from an upper side and a lower side of the noodle strings at the same time.

The method of bringing the superheated steam in contact with the raw noodle strings under atmospheric conditions means a method in which the superheated steam contacts the raw noodle strings under atmospheric conditions where the superheated steam has completely spread, without directly spraying the superheated steam flow to the raw noodle strings as described above.

The method of bringing the superheated steam in indirect contact with the raw noodle strings means a method in which the flow of the superheated steam contacts the other solid substances before contacting the noodle strings and then contacts the raw noodle strings in a state where the flow of the superheated steam has been weakened and has spread.

The method of bringing the superheated steam in contact with the raw noodle strings by direct spraying has the advantages that the intended effects can be obtained by treatment in a short time to thereby downsize the steam chamber, a treatment apparatus, or the like. On the other hand, the method of bringing the superheated steam in contact with the raw noodle strings under atmospheric conditions or in indirect contact with the raw noodle strings has the advantage that it achieves the treatment with the superheated steam more uniformly than the direct spraying method.

For example, in the method of bringing the superheated steam in contact with the raw noodle strings by direct spraying, the temperature of the superheated steam that contacts the noodle strings is preferably about 120 to 200°C, more preferably about 130 to 180°C, for the treatment with the superheated steam, because a heat amount as high as possible is imparted to the surface and inside of the noodle strings in the superheated steam treatment step.

Unlike usual steaming with saturated steam, in this superheated steam treatment step, formation of a layer in a paste form in which starch particles are broken occurs on the surface of the noodle strings, in addition to the gelatinization of the noodle strings. Specifically, condensation occurs on the surface of the noodle strings by the rapid heating of the raw noodle strings so that moisture is supplied thereto. Thereafter, the starch particles present in the vicinity of the surface of the noodle strings are selectively broken to form a layer in a paste form on the surface of the noodle strings. Unlike usual steaming with saturated steam, drying also occurs on the surface of the noodle strings. Thus, this step is preferably carried out so as to prevent the surface of the noodle strings from being dried too much. If the surface of the noodle strings is dried too much, instant noodles obtained through subsequent drying have a hard core and thus it is difficult to bring supple texture.

In order to prevent the drying of the surface of the noodle strings in the superheated steam treatment step, non-superheated steam may be used at the same time with the superheated steam flow. This can relieve rapid change caused by the superheated steam flow. If the non-superheated steam is stronger than the superheated steam, the superheated steam treatment may not be sufficiently effective. Therefore, the non-superheated steam is preferably used so as not to dry the surface of the noodle strings.

The superheated steam treatment step may be supplemented with a moisture supplying step during the course thereof. The moisture supplying step is not particularly limited and can be carried out inside or outside the superheated steam treatment chamber, for example, by showering the noodle strings with water or hot water or immersing the noodle strings in water or hot water.

Specific examples of such an approach include a method as described in PTL 4 which involves a moisture supplying step after spraying with superheated steam, and another steaming step using superheated steam and/or non-superheated steam, or which repeatedly involves a moisture supplying step after spraying with superheated steam, and a steaming step using superheated steam and/or non-superheated steam. Such a method allows the noodle strings, particularly, thick noodle strings, to be thoroughly heated to the core without drying the surface of the noodle strings too much.

3. Drying

The noodle strings that have undergone the superheated steam treatment step as mentioned above are finally subjected to a drying step so that the moisture of the noodle strings is removed to prepare instant noodles.

In the present embodiment, the type of the drying step is not particularly limited, and a drying process generally used in the production of instant noodles can be applied thereto. Specific examples thereof include a fry drying process as well as non-fry drying processes such as a hot-air drying process, a high-temperature hot-air drying process, a superheated steam drying process, a freeze dry process, a microwave drying process, and a low-temperature air drying process. The drying step can also be carried out by a combination of these processes. The specific conditions are not particularly limited, and the treatment is usually carried out at about 130 to 160°C for about 1 to 3 minutes for the fry drying process and at about 60 to 120°C for about 15 to 180 minutes for the hot-air drying process. The moisture content of the dried noodle strings can be about 1 to 5 wt% for the fry drying process and about 5 to 10 wt% for the hot-air drying process.

In the case of carrying out the superheated steam drying process after the superheated steam treatment step, the superheated steam treatment step and the superheated steam drying step may be carried out under the same conditions, as in PTL 1. The specific conditions are not particularly limited. The treatment in which the temperature of the superheated steam that contacts the noodle strings is about 120 to 200°C can be carried out for about 2 to 10 minutes, and the moisture content of the dried noodle strings can be about 6 to 12 wt%.

Alternatively, so-called fresh type instant noodles may be prepared through pH adjustment, heat sterilization, and full sealing without the drying step after the superheated steam treatment step. Each of the pH adjustment, heat sterilization, and full sealing steps can use an ordinary method in the steps of producing fresh type instant noodles.

As a result of the method described above, the surface of the noodle strings can be soft. In addition, the noodle strings can exhibit a cooking feeling such that the noodle strings have been thoroughly heated to the core. The instant noodles thus produced can have supple texture as a whole with moderate elasticity. For thick noodles having a large width, such texture has been difficult to obtain under general instant noodle reconstitution conditions, i.e., in a short time. By contrast, according to the present embodiment, instant noodles having such texture can be produced even under general instant noodle reconstitution conditions, i.e., in a short time.

**Examples**

Hereinafter, the present embodiment will be described in more detail with reference to Examples.

(Experiment 1)

<Verification of effects on fried noodles>

(Example 1-1) <With powder fat or oil, superheated steam>

30 g (= 3.0 wt% with respect to a main raw material) of a powder fat or oil (average particle size: 0.15 mm) was added to 1 kg of noodle material powder consisting of 750 g of wheat flour and 250 g of starch. This mixture was well stirred using a mixer. Then, 400 ml of kneading water in which 20 g of salt and 9 g of phosphate were dissolved was added thereto. This mixture was adequately kneaded using a mixer to obtain a noodle dough. The obtained noodle dough was shaped and combined to form a noodle belt. The noodle belt was repeatedly rolled out to become the noodle belt having a final thickness of 1.20 mm. The noodle belt was then cut with a cutting blade of a square blade No. 9.

The cut raw noodle strings were treated with superheated steam. The conditions of the superheated steam involved generating high-temperature steam of about 260°C and supplying this steam at a steam flow rate of 100 kg/h to a tunnel type steam chamber in which a net conveyor moved.

The steam chamber included the ejection holes configured to directly spray the superheated steam flow from upper and lower sides of the net conveyor to the noodle strings transferred on the net conveyor. Many such ejection holes were arranged in a proceeding direction of the conveyor. The noodle strings were gelatinized by directly spraying the superheated steam flow from the ejection holes to the noodle strings.

The temperature of the superheated steam to which the noodle strings were exposed was measured by placing a temperature sensor on the surface of the noodle strings to monitor the temperature of the superheated steam to which the noodle strings were exposed in the steam chamber. The monitored temperature of the superheated steam in the treatment step was set to 140°C, and the steaming time was set to 36 seconds.

The noodle strings thus treated with the superheated steam were immersed in a seasoning liquid, i.e., a lightly salted water. The noodle strings were cut, and then one meal amount of the resulting noodle strings was filled in a retainer having a capacity of 380 ml and fried using palm oil of about 150°C for drying.

The instant fried noodles thus produced were cooled down and stored as a sample of Example 1-1.

(Comparative Example 1-1) <Without powder fat or oil, superheated steam>

Instant fried noodles were produced in the same manner as in Example 1-1 except that the powder fat or oil was not added. The instant fried noodles thus produced were cooled down and stored as a sample of Comparative Example 1-1.

(Comparative Example 1-2) <With powder fat or oil, non-superheated steam>

Instant fried noodles were produced according to the same method as in Example 1-1 except that non-superheated steam was used instead of the superheated steam. The flow rate of the non-superheated steam was 100 kg/h, and the steaming time was 36 seconds. In this operation, the monitored temperature of the non-superheated steam to which the noodle strings were exposed was 100°C. The instant fried noodles thus produced were cooled down and stored as a sample of Comparative Example 1-2.

(Comparative Example 1-3) <Without powder fat or oil, non-superheated steam>

Instant fried noodles were produced according to the method of Comparative Example 1-2 except that the powder fat or oil was not added. The instant fried noodles thus produced were cooled down and stored as a sample of Comparative Example 1-3.

These samples were each put in a polystyrene container. 400 ml of boiling water was poured into the container, and the lid of the container was closed. The samples were left for 5 minutes for reconstitution and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

The results of the sensory evaluation are shown in Table 1.

[Table 1]

|  | Example 1-1<br><br>With powder fat or oil Superheated steam treatment | Comparative Example 1-1<br><br>Without powder fat or oil Superheated steam treatment | Comparative Example 1-2<br><br>With powder fat or oil Non-superheated steam treatment | Comparative Example 1-3<br><br>Without powder fat or oil Non-superheated steam treatment |
|---|---|---|---|---|
| Softness of surface | 5 | 4 | 2 | 2 |
| Moderate elasticity of core | 5 | 2 | 2 | 2 |
| Cooking feeling of core | 5 | 4 | 2 | 2 |
| Reconstitution property | 5 | 3 | 3 | 2 |
| Suppleness | 5 | 2 | 2 | 2 |

(Experiment 1')

<Structural analysis of cross section of noodle strings>

The immersion step using a seasoning liquid and later steps were not carried out, and the steps previous to the immersion step were carried out in the same manner as in the 4 samples described above to produce noodle strings. These noodle strings were cut into about 3 cm pieces, then rapidly frozen to -40°C for freeze drying, and gold-deposited to prepare samples of Example 1-1', Comparative Example 1-1', Comparative Example 1-2', and Comparative Example 1-3'.

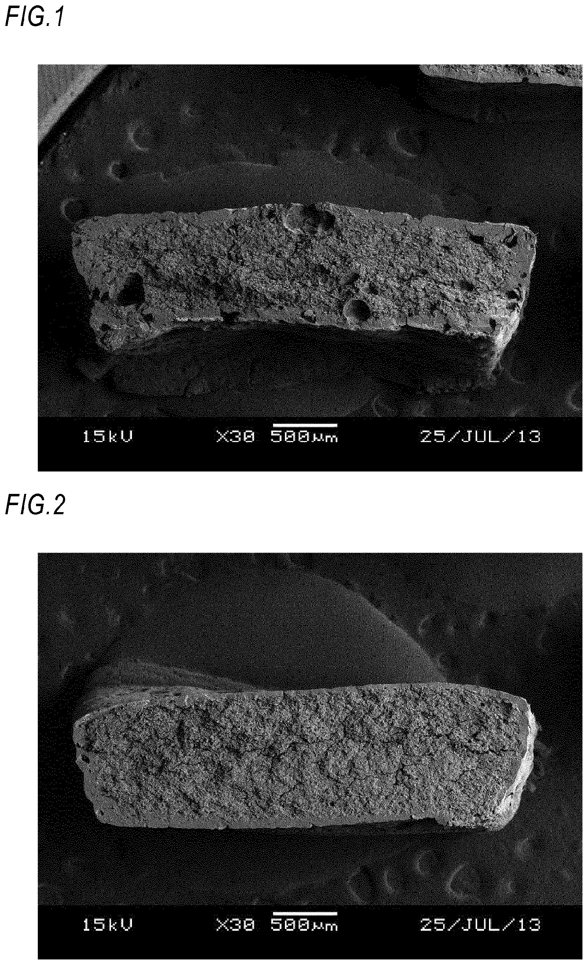

Figure 1, Figure 2, Figure 3, and Figure 4 show enlarged views of an image obtained by the observation of the cross section of the noodle strings produced in Example 1-1', Comparative Example 1-1', Comparative Example 1-2', and Comparative Example 1-3' under a scanning electron microscope, respectively. When these images are compared, Figure 1 and Figure 2 for the superheated steam-treated samples show that a layer in a paste form having much fewer fine irregularities as compared with the inside of the noodle strings was formed on the surface of the noodle strings.

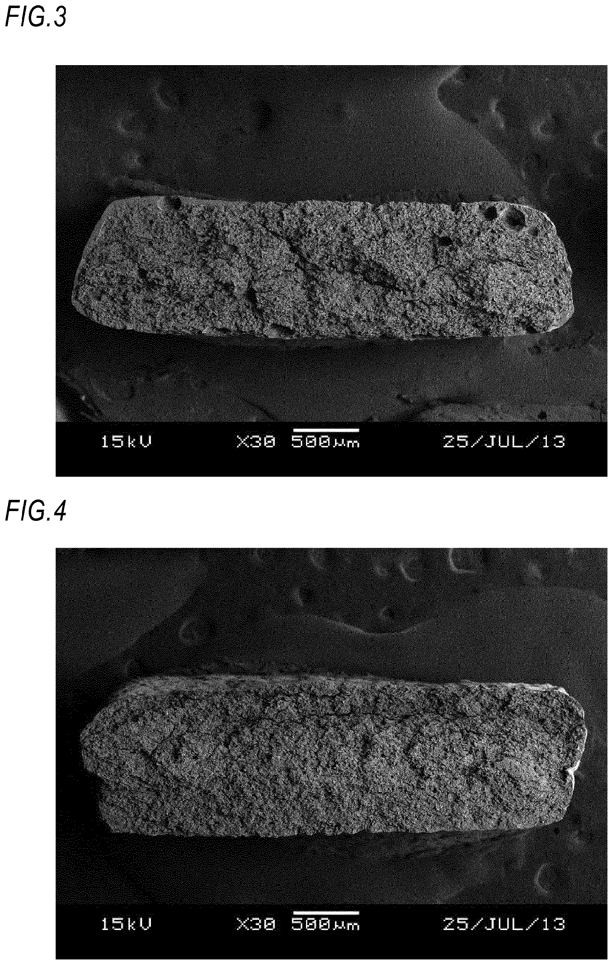

Figure 2 and Figure 4 for the samples into which the powder fat or oil was not incorporated show that voids can hardly be observed on the cross section of the noodle strings. By contrast, Figure 1 and Figure 3 for the samples into which the powder fat or oil was incorporated show that a plurality of voids having a visible size can be observed on the cross section of the noodle strings.

Among the voids included in the cross section of the noodle strings of each of Example and Comparative Examples thus obtained, the total number of voids having a major axis of 50 μm or larger was counted. The area of each void was calculated from its major axis and minor axis by approximation to an ellipsoid. The number of voids having a major axis of 50 μm or larger, the average area of the voids, the total area of the voids, and the total volume of the voids were summarized for each of Example and Comparative Examples in Table 2. In this context, the total volume of the voids was determined by raising the total area of the voids to the 3/2 power and indicated by a relative numeric value of the volume for each of Example and Comparative Examples when the smallest value (Comparative Example 1-3') among the obtained volumes was defined as 1. The cross-sectional images at 3 sites were used for each of Example and Comparative Examples, and the voids included in each image were tested.

[Table 2]

|  | Example 1-1' With powder fat or oil Superheated steam treatment | Comparative Example 1-1' Without powder fat or oil Superheated steam treatment | Comparative Example 1-2' With powder fat or oil Non-superheated steam treatment | Comparative Examiner 1-3' Without powder fat or oil Non-superheated steam treatment |
|---|---|---|---|---|
| The number of voids having major axis of 50 μm or larger | 72 | 14 | 50 | 11 |
| Average area of voids having major axis of 50 μm or larger | 8.24x10^3 | 3.25x10^3 | 8.61x10^3 | 3.02x10^3 |
| Total area of voids having major axis of 50 μm or larger | 5.93x10^5 | 4.55x10^4 | 4.31x10^5 | 3.32x10^4 |
| Total volume of voids having major axis of 50 μm or larger (relative value) | 75 | 1.60 | 47 | 1 |

Among the results of Table 2, the relative values of the total volume of the voids having a major axis of 50 μm or larger will be discussed below. In this context, the total volumes of the voids of Comparative Example 1-1', Comparative Example 1-2', and Comparative Example 1-3' are referred to as V(1-1'), V(1-2'), and V(1-3'), respectively.

As is evident, V(1-2') increased by 46 from V(1-3'). This is presumably because the noodle strings prepared from the noodle dough kneaded with the powder fat or oil are gelatinized so that the powder fat or oil kneaded therein is dissolved to form voids in the noodle strings; thus, the voids increase as a whole, and the total volume of the voids increases accordingly.

As is also evident, V(1-1') increased by 0.6 from V(1-3'). The reason of this is presumably as follows: when the gelatinization process is changed from the non-superheated steam treatment to the superheated steam treatment, the number of voids increases due to a factor such as slight drying that occurs in the noodle strings; and the total volume of the voids increases accordingly.

From these studies, the total volume of the voids is presumed to become

$$V(1\text{-}3') + \{V(1\text{-}2') - V(1\text{-}3')\} + \{V(1\text{-}1') - V(1\text{-}3')\}$$
$$= 1 + 46 + 0.6$$
$$= 47.6$$

by changing the conditions of Comparative Example 1-3' (Without powder fat or oil, non-superheated steam treatment) to the conditions of Example 1-1' (With powder fat or oil, superheated steam treatment). However, in actuality, the total volume of the voids obtained in Example 1-1' was 75, which was a value much larger than expected.

In short, structural change that cannot be predicted only from the incorporation of the powder fat or oil into the noodle strings and use of the superheated steam in the gelatinization process seems to occur under the conditions of Example 1-1' involving the superheated steam treatment step using the noodle strings kneaded with the powder fat or oil.

(Example 1-2) <Change of temperature of superheated steam treatment>

Instant fried noodles were produced according to the method of Example 1-1 except that the temperature of the superheated steam to which the noodle strings were exposed was set to 120°C. The instant fried noodles thus produced were cooled down and stored as a sample of Example 1-2.

(Example 1-3) <Change of temperature of superheated steam treatment>

Instant fried noodles were produced according to the method of Example 1-1 except that the temperature of the superheated steam to which the noodle strings were exposed was set to 170°C. The instant fried noodles thus produced were cooled down and stored as a sample of Example 1-3.

(Example 1-4) <Change of temperature of superheated steam treatment>

Instant fried noodles were produced according to the method of Example 1-1 except that the temperature of the superheated steam to which the noodle strings were exposed was set to 200°C. The instant fried noodles thus produced were cooled down and stored as a sample of Example 1-4.

These samples and the samples obtained in Example 1-1 and Comparative Example 1-2 were each put in a polystyrene container. 400 ml of boiling water was poured into the container, and the lid of the container was closed. The samples were left for 5 minutes for reconstitution and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

Also, the degree of drying of the surface of the noodle strings was evaluated after the superheated steam treatment and before the drying step as "Appearance of surface of noodle strings treated with superheated steam". When the surface of the noodle strings is dry, the steamed noodles lack clearness and become whitish. The ratio of whitish noodle strings was visually evaluated. The evaluation was performed on a scale on which 5 was perfection: 5: not dry; 4: less than 10% sites became whitish; 3: about 10 to 30% sites became whitish; 2: about 30 to 50% sites became whitish; and 1: 50% or more sites became whitish.

The results of the sensory evaluation and the results of the appearance evaluation are shown in Table 3.

[Table 3]

| | Comparative Example 1-2 | Example 1-2 | Example 1-1 | Example 1-3 | Example 1-4 |
|---|---|---|---|---|---|
| Temperature at which noodle strings were exposed | 100°C | 120°C | 140°C | 170°C | 200°C |
| Appearance of surface of noodle strings treated with superheated steam | 5 | 5 | 5 | 4 | 3 |
| Softness of surface | 2 | 4 | 5 | 5 | 5 |
| Moderate elasticity of core | 2 | 4 | 5 | 4.5 | 3.5 |

(continued)

| | Comparative Example 1-2 | Example 1-2 | Example 1-1 | Example 1-3 | Example 1-4 |
|---|---|---|---|---|---|
| Cooking feeling of core | 2 | 4 | 5 | 5 | 4 |
| Reconstitution property | 3.5 | 4 | 5 | 5 | 4 |
| Suppleness | 2 | 4 | 5 | 4.5 | 4 |

(Example 1-5) <Change of time of superheated steam treatment>

Instant fried noodles were produced according to the method of Example 1-1 except that the steaming time of the superheated steam to which the noodle strings were exposed was set to 15 seconds. The instant fried noodles thus produced were cooled down and stored as a sample of Example 1-5.

(Example 1-6) <Change of time of superheated steam treatment>

Instant fried noodles were produced according to the method of Example 1-1 except that the steaming time of the superheated steam to which the noodle strings were exposed was set to 45 seconds. The instant fried noodles thus produced were cooled down and stored as a sample of Example 1-6.

(Example 1-7) <Change of time of superheated steam treatment>

Instant fried noodles were produced according to the method of Example 1-1 except that the steaming time of the superheated steam to which the noodle strings were exposed was set to 60 seconds. The instant fried noodles thus produced were cooled down and stored as a sample of Example 1-7.

These samples and the sample of Example 1-1 were each put in a polystyrene container. 400 ml of boiling water was poured into the container, and the lid of the container was closed. The samples were left for 5 minutes for reconstitution and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

Also, the degree of drying of the surface of the noodle strings was evaluated after the superheated steam treatment and before the drying step as "Appearance of surface of noodle strings treated with superheated steam". When the surface of the noodle strings is dry, the steamed noodles lack clearness and become whitish. The ratio of whitish noodle strings was visually evaluated. The evaluation was performed on a scale on which 5 was perfection: 5: not dry; 4: less than 10% sites became whitish; 3: about 10 to 30% sites became whitish; 2: about 30 to 50% sites became whitish; and 1: 50% or more sites became whitish.

The results of the sensory evaluation and the results of the appearance evaluation are shown in Table 4.

[Table 4]

| | Example 1-5 | Example 1-1 | Example 1-6 | Example 1-7 |
|---|---|---|---|---|
| Time during which noodle strings were exposed | 15 seconds | 36 seconds | 45 seconds | 60 seconds |
| Appearance of surface of noodle strings treated with superheated steam | 5 | 5 | 4 | 3 |
| Softness of surface | 4 | 5 | 5 | 5 |
| Moderate elasticity of core | 4 | 5 | 4.5 | 3.5 |
| Cooking feeling of core | 4 | 5 | 5 | 4 |
| Reconstitution property | 4 | 5 | 5 | 4 |
| Suppleness | 4 | 5 | 4.5 | 4 |

(Example 1-8) <Change of amount of powder fat or oil added>

Instant fried noodles were produced according to the method of Example 1-1 except that the amount of the powder fat or oil added was set to 0.1 wt% with respect to the main raw material. The instant fried noodles thus produced were cooled down and stored as a sample of Example 1-8.

(Example 1-9) <Change of amount of powder fat or oil added>

Instant fried noodles were produced according to the method of Example 1-1 except that the amount of the powder fat or oil added was set to 0.3 wt% with respect to the main raw material. The instant fried noodles thus produced were cooled down and stored as a sample of Example 1-9.

(Example 1-10) <Change of amount of powder fat or oil added>

Instant fried noodles were produced according to the method of Example 1-1 except that the amount of the powder fat or oil added was set to 0.5 wt% with respect to the main raw material. The instant fried noodles thus produced were cooled down and stored as a sample of Example 1-10.

(Example 1-11) <Change of amount of powder fat or oil added>

Instant fried noodles were produced according to the method of Example 1-1 except that the amount of the powder fat or oil added was set to 1.0 wt% with respect to the main raw material. The instant fried noodles thus produced were cooled down and stored as a sample of Example 1-11.

(Example 1-12) <Change of amount of powder fat or oil added>

Instant fried noodles were produced according to the method of Example 1-1 except that the amount of the powder fat or oil added was set to 6.0 wt% with respect to the main raw material. The instant fried noodles thus produced were cooled down and stored as a sample of Example 1-12.

(Example 1-13) <Change of amount of powder fat or oil added>

Instant fried noodles were produced according to the method of Example 1-1 except that the amount of the powder fat or oil added was set to 10.0 wt% with respect to the main raw material. The instant fried noodles thus produced were cooled down and stored as a sample of Example 1-13.

(Comparative Example 1-4) <Change of amount of powder fat or oil added>

Instant fried noodles were produced according to the method of Example 1-1 except that the amount of the powder fat or oil added was set to 0.0 wt% with respect to the main raw material. The instant fried noodles thus produced were cooled down and stored as a sample of Comparative Example 1-4.

These samples and the sample obtained in Example 1-1 were each put in a polystyrene container. 400 ml of boiling water was poured into the container, and the lid of the container was closed. The samples were left for 5 minutes for reconstitution and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

The results of the sensory evaluation are shown in Table 5-1 and Table 5-2.

[Table 5-1]

|  | Comparative Example 1-4 | Example 1-8 | Example 1-9 | Example 1-10 |
|---|---|---|---|---|
| Amount of powder fat or oil added with respect to main raw material | 0.0 wt% | 0.1 wt% | 0.3 wt% | 0.5wt% |
| Softness of surface | 4 | 4 | 4 | 4 |
| Moderate elasticity of core | 2 | 3 | 3.5 | 4 |
| Cooking feeling of core | 4 | 4 | 4 | 4 |
| Reconstitution property | 3 | 4 | 4 | 4 |

(continued)

|  | Comparative Example 1-4 | Example 1-8 | Example 1-9 | Example 1-10 |
|---|---|---|---|---|
| Suppleness | 2 | 3 | 3.5 | 4 |

[Table 5-2]

|  | Example 1-11 | Example 1-1 | Example 1-12 | Example 1-13 |
|---|---|---|---|---|
| Amount of powder fat or oil added with respect to main raw material | 1.0 wt% | 3.0 wt% | 6.0 wt% | 10. 0wt% |
| Softness of surface | 5 | 5 | 5 | 5 |
| Moderate elasticity of core | 5 | 5 | 4 | 3 |
| Cooking feeling of core | 5 | 5 | 4 | 3 |
| Reconstitution property | 5 | 5 | 4 | 4 |
| Suppleness | 5 | 5 | 4 | 3 |

(Experiment 2)

<Study on superheated steam treatment including moisture supplying step>

(Example 2-1) <With powder fat or oil, superheated steam>

A powder fat or oil (average particle size: 0.15 mm) was added to 1 kg of noodle material powder consisting of 750 g of wheat flour and 250 g of starch. This mixture was well stirred using a mixer. Then, 400 ml of kneading water in which 20 g of salt and 9 g of phosphate were dissolved was added thereto. This mixture was adequately kneaded using a mixer to obtain a noodle dough. The obtained noodle dough was shaped and combined to form a noodle belt. The noodle belt was repeatedly rolled out to become the noodle belt having a final thickness of 1.50 mm. The noodle belt was then cut with a cutting blade of a square blade No. 9.

The cut raw noodle strings were steamed with superheated steam in the superheated steam treatment. The conditions of the superheated steam involved generating high-temperature steam of about 260°C and supplying this steam at a steam flow rate of 100 kg/h to a tunnel type steam chamber in which a net conveyor moved.

The steam chamber included the ejection holes configured to directly spray the superheated steam flow from upper and lower sides of the net conveyor to the noodle strings transferred on the net conveyor. Many such ejection holes were arranged in a proceeding direction of the conveyor. The noodle strings were steamed by directly spraying the superheated steam flow from the ejection holes to the noodle strings.

The temperature of the superheated steam to which the noodle strings were exposed was measured by placing a temperature sensor on the surface of the noodle strings to monitor the temperature of the superheated steam to which the noodle strings were exposed in the steam chamber. The monitored temperature of the superheated steam in the treatment step was set to 140°C, and the steaming time was set to 36 seconds.

The noodle strings thus steamed with the superheated steam were immersed for 10 seconds in hot water heated to 80°C in the moisture supplying step. After the moisture supplying step, the noodle strings were steamed again with the superheated steam in the same manner as described above.

The noodle strings thus treated with the superheated steam were immersed in a seasoning liquid, i.e., a lightly salted water. The noodle strings were cut, and then one meal amount of the resulting noodle strings was filled in a retainer having a capacity of 380 ml and fried using palm oil of about 150°C for drying.

The instant fried noodles thus produced were cooled down and stored as a sample of Example 2-1.

(Comparative Example 2-1) <Without powder fat or oil, superheated steam>

Instant fried noodles were produced according to the method of Example 2-1 except that the powder fat or oil was not added. The instant fried noodles thus produced were cooled down and stored as a sample of Comparative Example 2-1.

(Comparative Example 2-2) <With powder fat or oil, non-superheated steam>

Instant fried noodles were produced according to the method of Example 2-1 except that non-superheated steam was used instead of the superheated steam. The flow rate of the non-superheated steam was 100 kg/h, and the steaming time was 36 seconds. In this operation, the monitored temperature of the non-superheated steam to which the noodle strings were exposed was 100°C. The instant fried noodles thus produced were cooled down and stored as a sample of Comparative Example 2-2.

(Comparative Example 2-3) <Without powder fat or oil, non-superheated steam>

Instant fried noodles were produced according to the method of Comparative Example 2-2 except that the powder fat or oil was not added. The instant fried noodles thus produced were cooled down and stored as a sample of Comparative Example 2-3.

These samples were each put in a polystyrene container. 400 ml of boiling water was poured into the container, and the lid of the container was closed. The samples were left for 5 minutes for reconstitution and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

The results of the sensory evaluation are shown in Table 6.

[Table 6]

| | Example 2-1<br><br>With powder fat or oil Superheated steam treatment | Comparative Example 2-1<br><br>Without powder fat or oil Superheated steam treatment | Comparative Example 2-2<br><br>With powder fat or oil Non-superheated steam treatment | Comparative Example 2-3<br><br>Without powder fat or oil Non-superheated steam treatment |
|---|---|---|---|---|
| Softness of surface | 5 | 4 | 2 | 2 |
| Moderate elasticity of core | 5 | 2 | 2 | 2 |
| Cooking feeling of core | 5 | 4 | 2 | 2 |
| Reconstitution property | 5 | 4 | 3 | 2 |
| Suppleness | 5 | 2.5 | 2 | 2 |

(Experiment 3)

<Study on non-fried noodles>

(Example 3-1) <With powder fat or oil, superheated steam treatment>

Raw noodle strings were prepared and treated with superheated steam by the method of Example 1-1. The resulting noodle strings were immersed in a seasoning liquid, i.e., a lightly salted water. The noodle strings were cut, and then one meal amount of the resulting noodle strings was filled in a retainer having a capacity of 380 ml and dried for about 30 minutes in a hot air drier chamber having a temperature of 90°C and a wind speed of 4 m/s. The instant non-fried noodles thus produced were cooled down and stored as a sample of Example 3-1.

(Comparative Example 3-1) <Without powder fat or oil, superheated steam treatment>

Instant non-fried noodles were produced according to the method of Example 3-1 except that the powder fat or oil was not added. The instant non-fried noodles thus produced were cooled down and stored as a sample of Comparative Example 3-1.

(Comparative Example 3-2) <With powder fat or oil, non-superheated steam treatment>

Instant non-fried noodles were produced according to the method of Example 3-1 except that non-superheated steam was used instead of the superheated steam. The flow rate of the non-superheated steam was 100 kg/h, and the steaming time was 36 seconds. In this operation, the monitored temperature of the non-superheated steam to which the noodle strings were exposed was 100°C. The instant non-fried noodles thus produced were cooled down and stored as a sample of Comparative Example 3-2.

(Comparative Example 3-3) <With powder fat or oil, high-temperature hot-air drying process>

Instant non-fried noodles were produced according to the method of Example 3-1 except that high-temperature hot air was used instead of the superheated steam. The temperature of the high-temperature hot air was set to 140°C, which was the same as the temperature of the superheated steam to which the noodle strings were exposed. The wind speed was set to 6 m/s. The high-temperature hot air treatment time was set to 36 seconds, as in Example 3-1.

These samples were each boiled for 5 minutes in a pot containing 500 ml of boiling water, and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

The results of the sensory evaluation are shown in Table 7.

[Table 7]

|  | Example 3-1<br><br>With powder fat or oil Superheated steam | Comparative Example 3-1<br><br>Without powder fat or oil Superheated steam | Comparative Example 3-2<br><br>With powder fat or oil Non-superheated steam | Comparative Example 3-3<br><br>Without powder fat or oil High-temperature hot air |
|---|---|---|---|---|
| Temperature at which noodle strings were exposed | 140°C | 140°C | 100°C | 140°C |
| Softness of surface | 5 | 4 | 2 | 3 |
| Moderate elasticity of core | 5 | 2 | 2 | 2 |
| Cooking feeling of core | 5 | 4 | 3 | 2 |
| Reconstitution property | 5 | 4 | 3 | 2 |
| Suppleness | 5 | 2.5 | 2 | 2 |

(Experiment 4)

<Verification of effects of superheated steam drying>

(Example 4-1) <With powder fat or oil, superheated steam>

A powder fat or oil (average particle size: 0.15 mm) was added to 1 kg of noodle material powder consisting of 750 g of wheat flour and 250 g of starch. This mixture was well stirred using a mixer. Then, 400 ml of kneading water in which 20 g of salt and 9 g of phosphate were dissolved was added thereto. This mixture was adequately kneaded using a mixer to obtain a noodle dough. The obtained noodle dough was shaped and combined to form a noodle belt. The noodle belt was repeatedly rolled out to become the noodle belt having a final thickness of 1.20 mm. The noodle belt was then cut with a cutting blade of a square blade No. 9.

The cut raw noodle strings were steamed with superheated steam in the superheated steam treatment. The conditions of the superheated steam involved generating high-temperature steam of about 260°C and supplying this steam at a steam flow rate of 100 kg/h to a tunnel type steam chamber in which a net conveyor moved.

The steam chamber included the ejection holes configured to directly spray the superheated steam flow from upper and lower sides of the net conveyor to the noodle strings transferred on the net conveyor. Many such ejection holes were arranged in a proceeding direction of the conveyor. The noodle strings were steamed by directly spraying the superheated steam flow from the ejection holes to the noodle strings.

The temperature of the superheated steam to which the noodle strings were exposed was measured by placing a temperature sensor on the surface of the noodle strings to monitor the temperature of the superheated steam to which the noodle strings were exposed in the steam chamber. The monitored temperature of the superheated steam in the treatment step was set to 140°C, and the steaming time was set to 3 minutes and 30 seconds.

The instant dried noodles thus produced were cooled down and stored as a sample of Example 4-1.

(Comparative Example 4-1) <Without powder fat or oil, superheated steam treatment>

Instant dried noodles were produced according to the method of Example 4-1 except that the powder fat or oil was not added. The instant dried noodles thus produced were cooled down and stored as a sample of Comparative Example 4-1.

(Comparative Example 4-2) <With powder fat or oil, high-temperature hot-air drying process>

Instant dried noodles were produced according to the method of Example 4-1 except that high-temperature hot air was used instead of the superheated steam. The temperature of the high-temperature hot air was set to 140°C, which was the same as the temperature of the superheated steam to which the noodle strings were exposed. The wind speed was set to 6 m/s. The high-temperature hot air treatment time was set to 3 minutes and 30 seconds, as in Example 4-1.

These samples were each boiled for 5 minutes and 30 seconds in a pot containing 500 ml of boiling water and then eaten. The method for evaluating the noodles on eating them was as follows: the noodles were sensory-evaluated by five experienced panelists; and the evaluation for each item was performed on a scale on which 5 was perfection: 5: very good; 4: good; 3: fair; 2: slightly poor; and 1: poor.

The results of the sensory evaluation are shown in Table 8.

[Table 8]

|  | Example 4-1<br><br>With powder fat or oil<br>Superheated steam | Comparative Example 4-1<br><br>Without powder fat or oil<br>Superheated steam | Comparative Example 4-2<br><br>With powder fat or oil High-temperature hot air |
|---|---|---|---|
| Temperature at which noodle strings were exposed | 140°C | 140°C | 140°C |
| Blister on surface | Hardly present | Many | Hardly present |
| Softness of surface | 5 | 4 | 3 |
| Moderate elasticity of core | 5 | 2 | 2 |
| Cooking feeling of core | 5 | 4 | 2 |
| Reconstitution property | 5 | 4 | 2 |
| Suppleness | 5 | 2 | 2 |

**Claims**

1.   A method for producing instant noodles, comprising a superheated steam treatment step of treating, with superheated steam, raw noodle strings prepared from a noodle dough containing 0.5 to 6.0 wt% of a fat or oil and/or an emulsifier that is in a solid powder form at ordinary temperature with respect to the weight of a main raw material powder, wherein the temperature of the superheated steam to which the raw noodle strings are exposed is 120 to 200°C.

2.   The method for producing instant noodles according to claim 1, wherein the amount of the powder fat or oil contained is 1.0 to 3.0 wt% with respect to the weight of a main raw material powder.

3.   The method for producing instant noodles according to claim 1 or 2, wherein the temperature of the superheated steam to which the raw noodle strings are exposed in the super heated steam treatment step is 130 to 180°C.

4. The method for producing instant noodles according to any one of claims 1 to 3, wherein the time during which the superheated steam contacts with the raw noodle strings in the superheated steam treatment step is 15 to 60 seconds.

5. The method for producing instant noodles according to any one of claims 1 to 4, further comprising, after the superheated steam treatment step, a drying step of drying the noodle strings that have undergone the superheated steam treatment step by a fry drying process, a hot-air drying process, a high-temperature hot-air drying process, a superheated steam drying process, a microwave drying process, or a freeze dry process, or a combination thereof.

6. The method for producing fresh type instant noodles according to any one of claims 1 to 4, wherein the instant noodles are fresh type instant noodles, and the method comprises, after the superheated steam treatment step, the step of subjecting the noodle strings that have undergone the superheated steam treatment step to pH adjustment, full sealing, and heat sterilization.

7. Instant noodles produced by a production method according to any one of claims 1 to 6.


**Patentansprüche**

1. Ein Verfahren zur Herstellung von Instantnudeln, umfassend einen Heißdampfbehandlungsschritt des Behandelns roher Nudelfäden mit überhitztem Dampf, die aus einem Nudelteig hergestellt sind, der 0,5 bis 6,0 Gew.-% eines Fettes oder Öles und/oder einen Emulgator enthält, der bei Normaltemperatur in einer festen Pulverform vorliegt, bezogen auf das Gewicht eines Hauptrohmaterialpulvers, wobei
die Temperatur des überhitzten Dampfes, dem die rohen Nudelfäden ausgesetzt werden, 120 bis 200 °C beträgt.

2. Das Verfahren zur Herstellung von Instantnudeln nach Anspruch 1, wobei die enthaltene Menge des Pulverfettes oder -öles 1,0 bis 3,0 Gew.-%, bezogen auf das Gewicht eines Hauptrohmaterialpulvers, beträgt.

3. Das Verfahren zur Herstellung von Instantnudeln nach Anspruch 1 oder 2, wobei die Temperatur des überhitzten Dampfes, dem die rohen Nudelfäden in dem Heißdampfbehandlungsschritt ausgesetzt werden, 130 bis 180 °C beträgt.

4. Das Verfahren zur Herstellung von Instantnudeln nach einem der Ansprüche 1 bis 3, wobei die Zeit, während der der überhitzte Dampf in dem Heißdampfbehandlungsschritt mit den rohen Nudelfäden in Kontakt ist, 15 bis 60 Sekunden beträgt.

5. Das Verfahren zur Herstellung von Instantnudeln nach einem der Ansprüche 1 bis 4, weiterhin umfassend nach dem Heißdampfbehandlungsschritt einen Trocknungsschritt des Trocknens der Nudelfäden, die den Heißdampfbehandlungsschritt durchlaufen haben, durch ein Frittiertrocknungsverfahren, ein Heißlufttrocknungsverfahren, ein Heißlufttrocknungsverfahren bei hoher Temperatur, ein Heißdampftrocknungsverfahren, ein Mikrowellentrocknungsverfahren oder ein Gefriertrocknungsverfahren oder eine Kombination davon.

6. Das Verfahren zur Herstellung von frischen Instantnudeln nach einem der Ansprüche 1 bis 4, wobei die Instantnudeln frische Instantnudeln sind und das Verfahren nach dem Heißdampfbehandlungsschritt den Schritt des Durchführens von pH-Einstellung, Vollversiegelung und Hitzesterilisierung an den Nudelfäden, die den Heißdampfbehandlungsschritt durchlaufen haben, umfasst.

7. Instantnudeln, hergestellt durch ein Herstellungsverfahren nach einem der Ansprüche 1 bis 6.


**Revendications**

1. Procédé de production de nouilles instantanées, comprenant une étape de traitement à la vapeur surchauffée consistant à traiter, à la vapeur surchauffée, des rubans de nouilles bruts préparés à partir d'une pâte à nouilles contenant de 0,5 à 6,0 % en poids d'une graisse ou d'une huile et/ou d'un agent émulsifiant qui se présente sous la forme d'une poudre solide à une température ordinaire par rapport au poids d'une poudre de matière première principale, dans lequel
la température de la vapeur surchauffée à laquelle les rubans de nouilles bruts sont exposés est de 120 à 200 °C.

**2.** Procédé de production de nouilles instantanées selon la revendication 1, dans lequel la quantité de la graisse ou de l'huile contenue dans la poudre est de 1,0 à 3,0 % en poids par rapport au poids d'une poudre de matière première principale.

**3.** Procédé de production de nouilles instantanées selon la revendication 1 ou 2, dans lequel la température de la vapeur surchauffée à laquelle les rubans de nouilles bruts sont exposés au cours de l'étape de traitement à la vapeur surchauffée est de 130 à 180 °C.

**4.** Procédé de production de nouilles instantanées selon l'une quelconque des revendications 1 à 3, dans lequel le temps durant lequel la vapeur surchauffée est en contact avec les rubans de nouilles bruts au cours de l'étape de traitement à la vapeur surchauffée est de 15 à 60 secondes.

**5.** Procédé de production de nouilles instantanées selon l'une quelconque des revendications 1 à 4, comprenant en outre, après l'étape de traitement à la vapeur surchauffée, une étape de séchage consistant à sécher les rubans de nouilles qui ont subi l'étape de traitement à la vapeur surchauffée par un procédé de séchage par friture, un procédé de séchage à l'air chaud, un procédé de séchage à l'air chaud et à haute température, un procédé de séchage à la vapeur surchauffée, un procédé de séchage par micro-ondes ou un procédé de lyophilisation, ou une combinaison de ceux-ci.

**6.** Procédé de production de nouilles instantanées de type fraîches selon l'une quelconque des revendications 1 à 4, dans lequel les nouilles instantanées sont des nouilles instantanées de type fraîches, et le procédé comprend, après l'étape de traitement à la vapeur surchauffée, l'étape consistant à soumettre les rubans de nouilles qui ont subi l'étape de traitement à la vapeur surchauffée à un ajustement du pH, à un scellage hermétique et à une stérilisation à chaud.

**7.** Nouilles instantanées produites par un procédé de production selon l'une quelconque des revendications 1 à 6.

*FIG.1*

*FIG.2*

*FIG.3*

*FIG.4*

**EP 3 053 455 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6356787 B
- JP S6262138 B
- JP 2003174853 A
- JP 4438969 B
- JP S5963152 B
- JP 2006122020 A
- JP 2011055789 A